# EUROPEAN PATENT SPECIFICATION

(11) **EP 1 439 500 B1**
(45) Date of publication and mention of the grant of the patent: **07.03.2007**
(21) Application number: 04001003.5
(22) Date of filing: 19.01.2004
(51) Int. Cl.: G07D 7/12

(54) **A banknote detecting unit for a banknote distinguishing device**
Eine Banknotendetektionseinheit für ein Banknotenerkennungsgerät
Une unité de détection de billets de banque pour un appareil de distinction de billets de banque

(30) Priority: 20.01.2003 JP 2003011568
(43) Date of publication of application: 21.07.2004
(73) Proprietor: ASAHI SEIKO KABUSHIKI KAISHA, Tokyo 107-0062 (JP)
(72) Inventor: Suzuki, Daishi, Iwatsuki-shi, Saitama-ken (JP)
(74) Representative: Hofer, Dorothea

(56) References cited:
- EP-A- 1 049 055
- US-A- 4 769 532
- US-A- 6 104 036

## Description

This invention is related to a detecting unit which lightly detects predetermined information in a banknote for a banknote distinguishing device.

Especially, this invention is related to a banknote detecting unit for getting information to distinguish the transmitted rays and the reflected rays of the banknotes.

In this specification, "banknote" is a generic name which can be changed to a value sheet, for example; a certificate or a scrip etc.
"An emitting section" is a generic name which can be changed to money, tokens, goods, etc. Also "emitting section" is a generic name which emits visible rays or non-visible rays which is for example infrared rays, ultraviolet rays or laser, and is made up of a LED, a lens, a protection cover for the emitting section.
"Receiving section" is a generic name which receives light; for example a light diode which converts a light to electricity,
light transistor and an end face of light fiber for guiding light.
Also, "the obverse side", "the reverse", "the upper" and "the lower" are used for understanding.

### Description of the Prior Art

In the banknote distinguishing device for distinguishing genuine or fake banknotes, the distinguishing data usually are lightly received. For example, a transmission sensor which is structured by a light emitting section and a light receiving section which are located across the banknote passageway and a reflection sensor which is structured by a light emitting section and a light receiving section at the same sides are used, and the sensors receive the sampling data.
(See Japanese Patent No. 3307787).

In this prior art, the transmission sensor and the reflection sensor have each a light emitting section and a light receiving section. Therefore, the number of the light emitting section and the light receiving section needs the same number of sensors.
As a result, the banknote distinguishing device is rather expensive and large. In other words, the banknote distinguishing device can not be small.

Another prior art which emits over two wavelength is known for not getting bigger. (See Japanese Laid Open Patent 2001-195629). Therefore, the light source which has over two light sources is expensive, and is difficult to use.

Also, to make the initial setting of the banknote distinguishing device easier, in the reflection sensor, a receiving section is faced to an emitting section of the transmission sensor and is located opposite the emitting section to the banknote passageway.

Document US 6,104,036 A describes an apparatus and method for detecting a water mark and a security thread in a currency note. The apparatus comprises a first light source for illuminating an area on a first surface of a currency note and a second light source for illuminating an area on the opposite surface of the currency note, wherein the second light source is arranged opposite of the first light source with regard to the currency note passageway. The apparatus further comprises a first and a second sensor which are arranged that the first sensor receives a reflected light signal of the first light source and a transmissive light signal of the second light source and the second sensor receives a transmissive light signal of the first light source and a reflected light signal of the second light source.

Also, the emission amount of the emitting section which is adjusted as the output is constant is known. (See Japanese Patent No. 3307787).
However the receiving section is used for adjusting in the prior art.
Therefore, it is expensive corresponding to the receiving section and is larger.

As a prior art according to Article 54(3) EPC with regard to the contracting states DE, ES, GB, IT, the EP-A-1 429 297 has to be mentioned.

This document discloses a bank note detecting unit for a bank note distinguishing device comprising:
a first transmission sensor which includes a first light emitting section and a first light receiving section, wherein the first light receiving section is located on a first light axis of the first light emitting section and is located on the opposing side of a banknote passageway, which opposing side is opposite to the first light emitting section, wherein the first light axis slants to the banknote passageway,
a first reflection sensor which includes the first light emitting section and a second light receiving section, wherein the second light receiving suction is located on the same side of the banknote passageway as the first light emitting section,
a second light emitting section which is located on the opposing side of the banknote passageway, which opposing side is opposite to the first light emitting section, wherein the second light emitting section is located such that light emitted from the second light emitting section passes the banknote passageway and is received in the second light receiving section, wherein the second light emitting section and the second light receiving section form a second transmission sensor, and wherein the second light emitting section and the first light receiving section form a second reflection sensor, wherein
a light having a first wavelength is projected from the first light emitting section, and a light having a second wavelength which is different from the first wavelength is projected from the second light emitting section; and wherein
a microprocessor is provided for controlling the switching of the first light emitting section and the second light emitting section such that the first light emitting section emits light having the first wavelength, when the second light emitting section does not emit and that the second light emitting section emits light having the second wavelength, when the first light emitting section does not emit. The control means in EP-A-1 429 297 is implicitly a microprocessor.

### Problem(s) to be solved by the invention.

The first purpose of this invention is to provide an apparatus which may distinguish banknotes with a high accuracy and which is space-saving with regard to the arrangement of the transmission sensor and the reflection sensor.

The second purpose of this invention is to provide a banknote detecting device which is inexpensive, the banknote detecting device is made up of the transmission sensor and the reflection sensor.

The third purpose of this invention is to facilitate the initial setting for the transmission sensor and the reflection sensor.

This object is achieved by the subject-matter of claim 1. Further advantageous features are the subject-matter of the dependent claims.

In this structure, when the distinguishing data of the banknote is sampled, the light which is emitted from the first light emitting section is received in the light receiving section which is located opposite to the first light emitting section with regard to the banknote passageway.
In other words, the first light receiving section receives the transmitted light through the banknote.
Also, the light which is emitted from the first light emitting section is received in the second light receiving section which is located parallel to the first light emitting section.
In other words, the second light receiving section receives the reflected light which is reflected by the banknote.

In other words, the first light emitting section and the first light receiving section structure the first transmission sensor, and the first light emitting section and the second light receiving section structure the first reflection sensor.
Therefore the emitting sections arc common to the first transmission sensor and the first reflection sensor.
As a result, with this invention the emitting section is reduced by one.
Accordingly, the sensor's space and the costs are reduced.

According to a further embodiment of the present invention, the first light axis crosses in the obtuse opposite to the banknote traveling direction.
In this structure, the light which is emitted from the first light emitting section crosses to the transporting direction of the banknote in the obtuse opposite to the banknote traveling direction.
Therefore, the light axes of both the first light receiving section and the second light receiving section crosses to the transporting direction of the banknote in the acute angle.
In other words, the light axes slant in the transporting direction of the banknote, and the light axes of the light receiving sections face towards the opposite entry of the banknote passageway.
Therefore, the light which comes from the entry of the banknote passageway is not received at the first light receiving section and the second light receiving section.
As a result, the sensors are not influenced from the outside light.

The present invention includes a second light emitting section which is located opposite to the first light emitting section with regard to the banknote passageway, the second light emitting section is located on the second light axis.
In this structure, the light which is emitted from the second light emitting section is received in the second light receiving section through the banknote.
In other words, the second light emitting section and the second light receiving section structure the second transmission sensor.
Therefore the second emitting section and the first light receiving section structure the second reflection sensor.

Accordingly, the second transmission sensor and the second reflection sensor are structured, because the second light emitting section is added.
Therefore the light emitting section and the light receiving section is reduced by two.
Accordingly, the sensor's space and the costs are reduced.

According to the present invention, a first wavelength light is projected from the first light emitting section, and a second wavelength light is projected from the second light emitting section.
In this structure, when the first light receiving section receives the first wavelength light which is emitted from the first light emitting section, the first light receiving section outputs an output based on the first wavelength, and the second light receiving section outputs an output based on the first wavelength.

In other words, the first transmission sensor and the first reflection sensor output an output based on the first wavelength. When the light receiving sections receive the second wavelength light which is emitted from the second light emitting section, the first light receiving section and the second light receiving section output an output based on the second wavelength.

When the wavelength is different, the light which is passed through by the banknote is filtered.
Also the reflected light by the banknote also differs, because of the different ink.
Accordingly, the first transmission data are received from the first transmission sensor based on the first wavelength, the first reflection data are received from the first reflection sensor based on the face of the banknote, the second transmission data are received from the second transmission sensor based on the second wavelength, the second reflection data are received from the second reflection sensor based on the rear of the banknote.
Therefore, the distinguishing accuracy for the banknote is improved, because different sampling data are compared.

The present invention is desirable, because the first light emitting section projects infrared rays, and the second light emitting section emits non-infrared rays.
In this structure, the infrared rays are emitted from the first light emitting section and non-infrared rays are emitted from the second light emitting section.
The non-infrared rays are; for example radiant lights or ultraviolet rays.
In other words, the first transmission sensor outputs distinguishing data which are based on the passed infrared rays which transmit the banknote, the first reflection sensor outputs distinguishing data which are reflected by the banknote, the second transmission sensor outputs distinguishing data which are based on non-infrared rays and the second reflection sensor outputs distinguishing data which are based on non-infrared rays.
The emitting element for infrared rays or non-infrared rays (for example: red light) is easier received and is cheaper.
Therefore the banknote detecting unit can be made up easier and is inexpensive.

The present invention is desirable, because it further includes a reading controlling unit, which means, when the first light emitting section emits the rays, the receiving output of the first light emitting section is read, afterwards the emitting from the first light emitting section stops and the second light emitting section emits the rays, and the receiving output of the second receiving section is read, afterwards the receiving output of the first receiving section is read.

In this structure, when the first light emitting section emits the light, firstly, the receiving data of the first transmission sensor are output, secondly, the receiving data of the first reflection sensor are output, afterwards, the first light emitting section stops the emitting.
Next, second light emitting section emits the light, firstly, the receiving data of the second transmission sensor are output, secondly, the receiving data of the second reflection sensor are output, afterwards, the second emitting section stops the emitting.

In other words, when the first light emitting section emits the light, the second light emitting section does not emit.

Also, when the second light emitting section emits the light, the first light emitting section does not emit.
Therefore, the first transmission sensor and the first reflection sensor do not receive the effect from the second light emitting section.
As a result, the sensors output the receiving data based on the wavelength of the first light emitting section.
Also, the second transmission sensor and the second reflection sensor do not receive the effect from the first light emitting section.
Therefore, the sensors output the receiving data based on the wavelength of the second light emitting section.
As a result, the accuracy of distinguishing increases, because the banknote is distinguished based on the receiving data which is based on the wavelength from either the first light emitting section or the second light emitting section.

Also, the first transmission sensor samples data of the banknote.
Afterwards, the first reflection sensor samples data of the banknote.
Then the second transmission sensor samples data of the banknote.
Next the second reflection sensor samples data of the banknote. Therefore, the reflection data can be distinguished based on the transmission data.
As a result, the distinguishing accuracy of the banknote increases.
For example: "a watermark" is distinguished based on the transmission data, afterwards the reflection data are distinguished. The distinguishing accuracy of "a watermark" increases.

A further aspect has the following structure to solve the previous problems.
The banknote detecting unit for the banknote distinguishing device comprises:
a first transmission sensor which is structured by a first light emitting section which slants to a first light axis to the banknote passageway and a first light receiving section which is located on the first light axis and is located opposite the first light emitting section to the banknote passageway,
a first reflection sensor which is structured by the first light emitting section and a second light receiving section which is located at the same side of the first emitting section to the banknote passageway,
an emitting amount adjusting unit which adjusts the emitting amount to when the first light emitting section emits the output of the first light receiving section which then becomes a predetermined amount,
a receiving outputting adjusting unit which adjusts the gain to the output of the second light receiving section becomes a predetermined amount of the second light receiving section.

In this structure, the emitted light from the first light emitting section is received in the first light receiving section which is located opposite the first light emitting section with regard to the banknote passageway.
Also, the emitting amount is adjusted by the emitting amount adjusting unit as a predetermined amount which is constant to the receiving amount of the first light receiving section.
The first emitting element, the first light receiving element and the protecting cover have "data spread".
Therefore, "data spread" of the sampling data which are based on the individual difference is prevented.

Also, the gain for the output of the second receiving section is adjusted by the receiving outputting adjusting unit as a predetermined amount becomes the output of the second light receiving section.
The receiving element and the protecting cover have "data spread".
Therefore the sampling data have "data spread".
However the adjusting prevents the "data spread".
Therefore the initial setting of the emitting amount of the first light emitting section automatically is adjusted by the emitting amount adjusting unit.
And the output of the first reflection sensor is adjusted by the receiving outputting adjusting unit as the output as the constant.
Also, the initial setting is easier.

The initial setting is adjusted before the factory shipment.
Also, the adjusting of the emitting amount can be changed to doing the increasing and the decreasing of the luminance, doing the increasing and the decreasing of the emitting area and doing the increasing and decreasing of the distance between the light emitting section and the light receiving section.

### Embodiments of the Invention

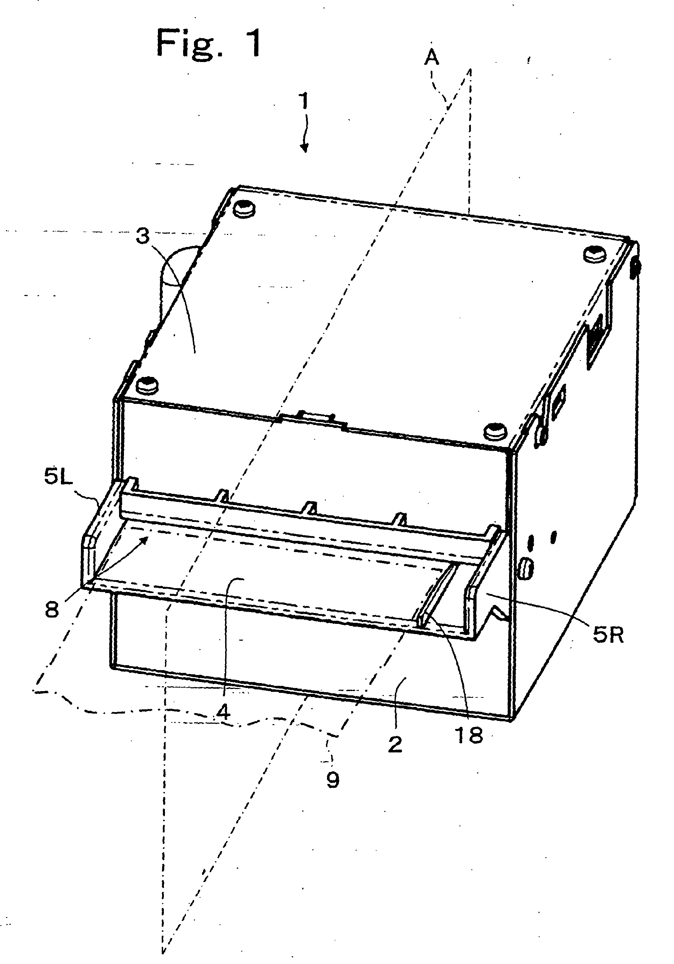

Fig. 1 is a perspective view of a banknote distinguishing device which is attached the banknote detecting unit of the embodiment.
Fig. 2 is a cross section view of section A in figure 1.
Fig. 3 is an enlarged view of section B in figure 2.
Fig. 4 is an enlarged view of section C in figure 2.
Fig. 5 is a block diagram of a detecting circuit of the banknote detecting section of the embodiment.
Fig. 6 is a timing chart for explaining the operation of the banknote detecting unit of the embodiment.
Fig. 7 is a block diagram for initial setting of the embodiment.
Fig. 8 is a flow chart for initial setting of the banknote detecting section of the embodiment.

Banknote distinguishing unit 1 includes lower member 2 and upper member 3.
Upper surface of lower member 2 is lower banknote guiding surface 4 which is flat.
Lower member 2 includes a right guiding board 5R which is located at the right side in right angle and a left guiding board 5L which is located at the left side in the right angle.
The distance between right guiding board 5R and left guiding board 5L is slightly wider than the width of an acceptable banknote.
The lower section of upper member 3 is inserted between right guiding board 5R and left guiding board 5L.
The under surface of the upper member 3 is upper banknote guiding surface 6 which is flat.

Lower banknote guiding surface 4 and upper banknote guiding surface 6 are located parallel and have a clearance which passes a banknote.
The clearance is a banknote passageway 7.
Upper banknote guiding surface 6 includes a downward slanting surface 11 to the transporting direction of a banknote 9 continues to a banknote entry 8 and upward a slanting surface 12 which continues downward the slanting surface 11.
A downward projection 13 is formed by the downward slanting surface 11 and the upward slanting surface 12, and is approximately triangle.

The lower banknote guiding surface 4 includes a flat surface 14 which is located at the banknote entry 8 and a second upward slanting surface 15 which is faced to upward the slanting surface 12 and continues to the flat surface 4.
Also, a second downward slanting surface 16 continues to second downward slanting surface 16.
An upward projection 17 is formed by the second upward slanting surface 15 and the second downward slanting surface 16, and is approximately a triangle.

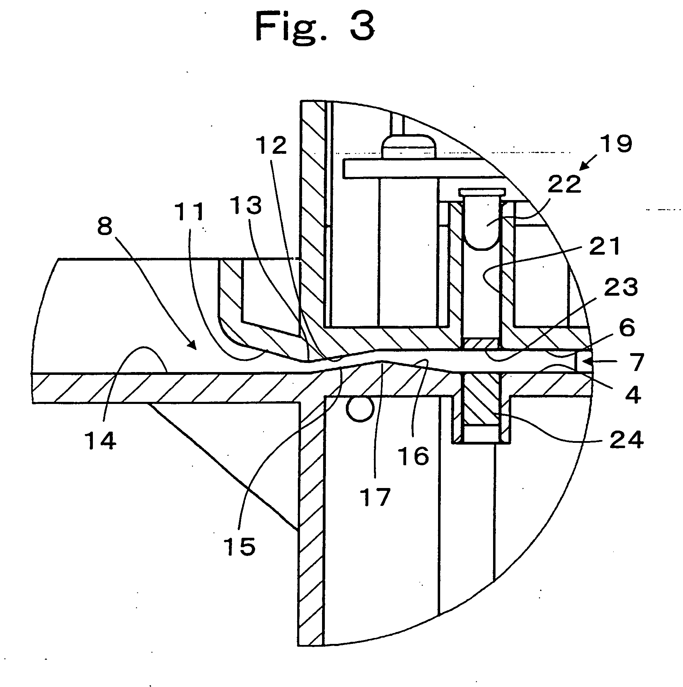

The top (the lower end) of the downward projection 13 goes towards the upward projection 17 to the transporting direction of the banknote, as shown in figure 3, and is slightly overlapped with the upper projection in the up and down direction.
Therefore, the malfunction of the after-mentioned starting sensor 19 which is based on all outside light is prevented.

A banknote guiding rib 18 is parallel to the right guiding board 5R, and is located at an area which protrudes towards the outside rather than the banknote entry 8 of the flat surface 4. The banknote guiding rib 18 is rectangle at a cross-section, and the height is either the same or smaller than the height of the banknote passageway 7.
The rear end of the banknote guiding rib 18 slants and makes flat surface 14 flush with the rear end near banknote entry 8.
The banknote guiding rib 18 is used as an indication for a banknote which is narrower than the distance between right guiding board 5R and left guiding board 5L.

A starting sensor 19 is located beside downstream side of the banknote transporting direction at the second downward slanting surface 16.
The starting sensor 19 includes a projecting/receiving section 22 which is located at the bottom (the upper end) of a holding hole 21 of the upper member.
A protecting cover 23 is fixed at the lower end of a keeping hole 21, and is the starting projecting/receiving section.

A starting reflector 24 is mounted on the lower member 2 which faces to the protecting cover 23.
Therefore, the beam is projected from the projecting/receiving section 22, and crosses the banknote passageway 7.
Afterwards, the beam is reflected by the starting reflector 24, also crosses the banknote passageway 7, and is received to the receiving section of the receiving section 22.
When the banknote 9 interrupts the beam of the starting sensor 19, the receiving section does not receive the beam.
Therefore, the banknote 9 is detected, afterwards a banknote transporting unit 25 is started based on the detection.

The banknote transporting unit 25 is located along the banknote passageway 7 downstream of the starting sensor 19.
The banknote transporting unit 25 includes a transporting unit 28 which is structured by an upper transporting section 26 and a lower transporting section 27, and is located in plurals and parallel.
However, if the banknote 9 can be transported straight, the transporting unit 28 can use only one.

The upper transporting section 26 includes pulleys 31, 32 which are attached on the upper member 3 and are rotatable.
The lower transporting section 27 includes pulleys 34, 35 and 36 and a belt 37 which are belted by the pulleys.
The pulleys 31 and 32 are resiliently supported towards the lower member 2, and have contact with the lower belt 37 to face the pulleys 34, 35 at a predetermined pressure.

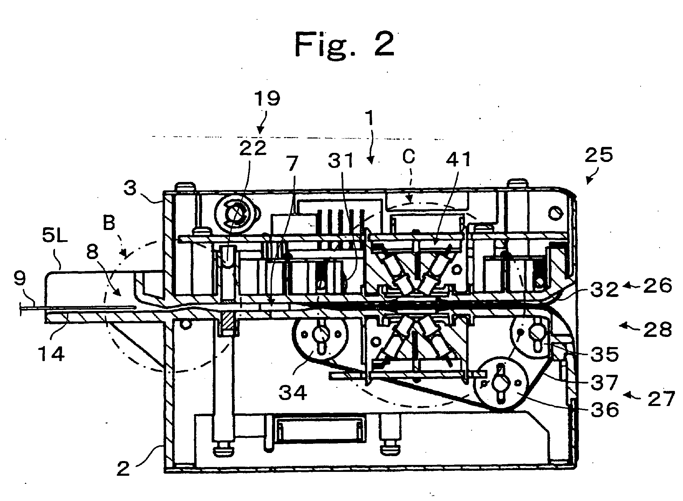

The pulley 36 is coupled to an output shaft of the motor (not shown).
When the banknote 9 is accepted, the pulley 36 is driven by a motor in the clockwise direction as shown in figure 2.
Therefore, the banknote 9 which is pinched by the lower belt 37 and the pulleys 31 and/or 32, is transported to the right in the banknote passageway 7.

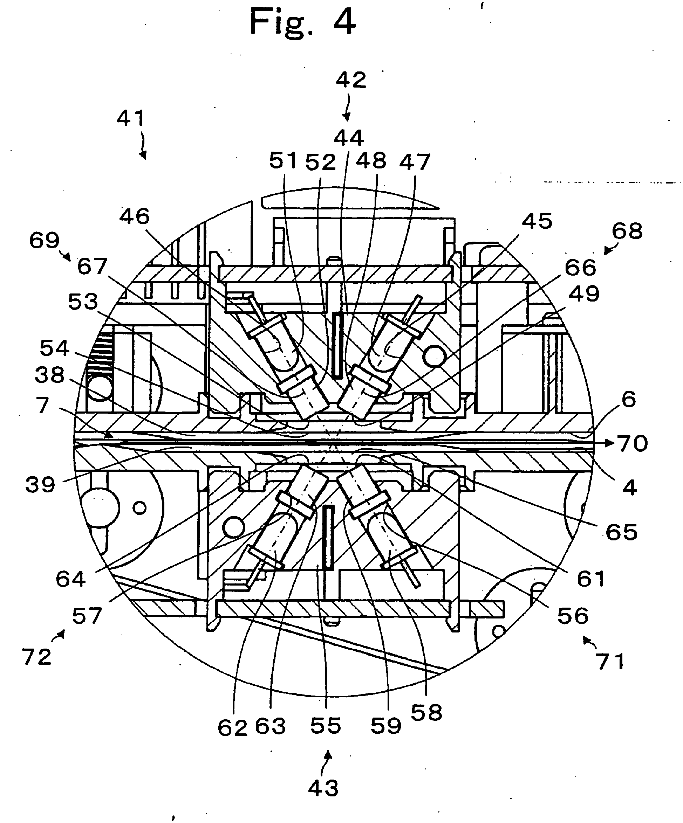

When the banknote 9 is returned, the pulley 36 is rotated in the opposite direction, and is transported to the left.
As shown in figure 4, an upper banknote stabilizer 38 is formed corresponding td the middle section of the lower belt 37.
The upper banknote stabilizer 38 extends from the upper banknote guiding surface 6 to the lower banknote guiding surface 4 and in the transporting direction of the banknote 9.

A lower banknote stabilizer 39 faces to the upper banknote stabilizer 38 and extends from the lower banknote guiding surface 4 to the upper banknote guiding surface 6.
The distance between the end of the upper banknote stabilizer 38 and the end of the lower banknote stabilizer 39 has the thickness of a few banknotes 9.
Also, it has two functions which flatten the banknote 9 and keep approximately constant to the distances of the after-mentioned transmission sensor and reflection sensor.

A banknote detecting unit 41 is located at the banknote passageway 7 where a banknote is transported by the banknote transporting unit 25.
The banknote detecting.unit 41 of this present invention includes the first transmission sensor 68, the first reflection sensor 69, the second transmission sensor 71 and the second reflection sensor 72.
These sensors are structured by the upper sensor unit 42 which is fixed at the upper member 3 and the lower sensor unit 43 which is fixed at lower member 2.

The upper sensor unit 42 and the lower sensor unit 43 have the same structure and are located symmetrically to the up and down direction referring to the banknote passageway 7.
Firstly, the upper sensor unit 42 is explained.
First, an emitting attaching hole 45 is formed at a first sensor body 44, and the axis line crosses the banknote passageway 7 in an obtuse angle towards the banknote entry 8.
A first receiving attaching hole 46 is formed upstream to the hole 45, and the axis line crosses the banknote passageway 7 at an acute angle.

A first light emitting element 47 is fixed at the bottom (top) of the first emitting attaching hole 45.
A first light emitting element 47 is for example a red light emitting diode.
A first emitting protecting cover 48 is fixed at the end of the first emitting attaching hole 45 and is made of a transparent resin; for example acrylate resin or glass and is cylindrical.
In other words, a first emitting section 49 is the end of the first emitting protecting cover 48.
After-mentioned protecting covers are made up in the same way as the first emitting protecting cover 48.
A second light receiving element 51 is fixed at the bottom (top) of the first receiving attaching hole 46.
The second light receiving element 51 is for example a light transistor.

A second receiving protecting cover 52 is fixed at the end of the first receiving attaching hole 46.
In other words, a second light receiving section 53 is the end of the second receiving protecting cover 52.
A second light receiving section 53 faces towards the rear to the banknote entry 8, therefore, it doesn't receive outside light.

The first light emitting section 49 and the second light receiving section 53 protrude downwards from the undersurface of the first sensor body 44 and face to the upper opening 54 which is formed at the upper banknote guiding surface 6.
When the first light emitting section 49 and the second light receiving section 53 protrude from the first sensor body 44, the first light emitting section 49 and the second light receiving section 53 can be cleaned.
Therefore, the adhered dust both on the first light emitting section 49 and the second light receiving section 53 are wiped away.
As a result, the sensor function is recovered easily.

Next, the lower sensor unit 43 is explained.

A second emitting attaching hole 56 is formed at a second sensor body 55, and the axis line crosses the banknote passageway 7 in an obtuse angle towards the banknote entry 8.
A second receiving attaching hole 57 is formed upstream at the hole 56, and the axis line crosses the banknote passageway 7 in an acute angle.

A second light emitting element 58 is fixed at the bottom of the second emitting attaching hole 56.
The second light emitting element 58 is for example a red light emitting diode.
A second emitting protecting cover 59 is fixed at the end of the second emitting attaching hole 56.
In other words, a second emitting section 61 is the end of the second emitting protecting cover 59.
A first light receiving element 62 is fixed at the bottom of a second receiving attaching hole 57.
The first light receiving element 62 is for example a light transistor.

A first receiving protecting cover 63 is fixed at the end of the second receiving attaching hole 57.
In other words, a first light receiving section 64 is the end of the first receiving protecting cover 63.
The first light receiving section 64 faces towards the rear to the banknote entry 8, therefore, it doesn't receive outside light.
The second light emitting section 61 and the first light receiving section 64 protrude upwards from the upper surface of the second sensor body 55 and faces to the lower opening 65 which is formed at the lower banknote guiding surface 4.

The first light' receiving section 64 is located on the first light axis 66 of the first light emitting section 49.
The second light receiving section 53 is located on the second light axis 67 of the second emitting section 61.
Therefore, the first light axis 66 and the second light axis 67 cross the transporting line 70 of the banknote 9 at the banknote passageway 7 at an obtuse angle, and it is X like in shape.

By this, the first light emitting section 49 and the first light receiving section 64 structure the first light transmission sensor 68, and the first light emitting section 49 and the second light receiving section 53 structure the first reflection sensor 69.
Also, the second light emitting section 61 and the second light receiving section 53 structure the second transmission sensor 71, and the second light emitting section 61 and the first light receiving section 64 structure the second reflection sensor 72.

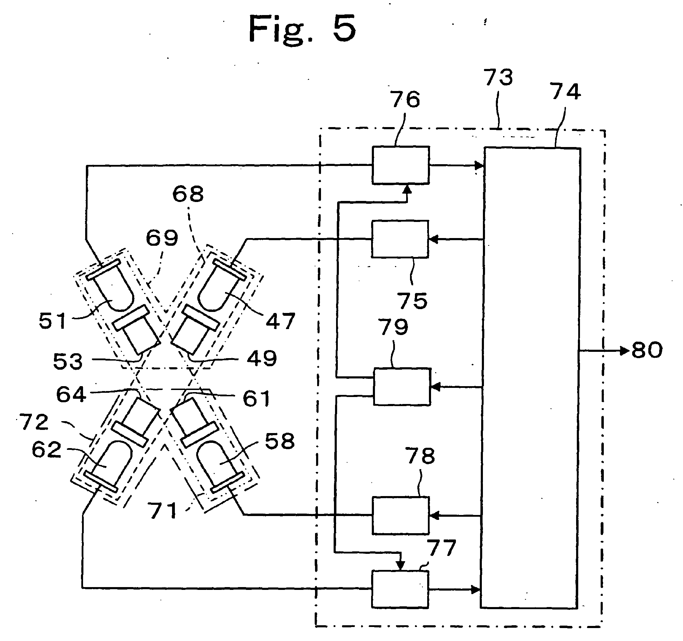

Next, a banknote detecting circuit 73 is explained referring to figure 5.
The banknote detecting circuit 73 includes a first switching circuit 75, a second switching circuit 78, a first A/D converting circuit 77, a second converting circuit 76 and a reading controlling circuit 79.
The first switching circuit 75 controls lighting of the first light emitting element 47 based on the direction of signals from a microprocessor 74.
The second switching circuit 78 controls lighting of the second light emitting element 58 based on the direction of signals from the microprocessor 74.
The first A/D converting circuit 77 converts an analog signal of the first light receiving element 62 to a digital signal, then the digital signal is output to the microprocessor 74.
The second A/D converting circuit 76 converts an analog signal of the second light receiving element 51 to a digital signal, then the digital signal is output to the microprocessor 74.
The reading controlling circuit 79 controls the outputting of the first A/D converting circuit 77 and the second A/D converting circuit 76 to the microprocessor 74.

Also, the reading controlling circuit 79 can sample the output both of the first A/D converting circuit 77 and the second A/D converting circuit 76 based on the program of the microprocessor 74.

The microprocessor 74 outputs an authentic signal 80 to the banknote 9 based on the sampling data from both of the first A/D converting circuit 77 and the second A/D converting circuit 76.
The starting sensor 19 outputs the banknote signal to the microprocessor 74.
Then the microprocessor 74 controls the motor (not shown) of the banknote transporting unit 25 based on the banknote signal.

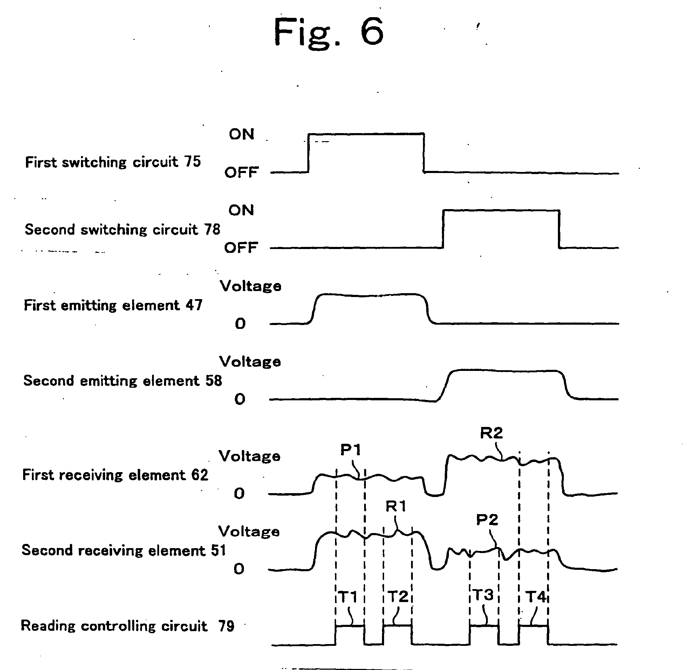

Next, the operation of the embodiment is explained referring to the timing chart in figure 6.

The banknote 9 is put on the flat surface 14, then the left edge is moved along left guiding board 5L.
When the banknote 9 has a maximum width, the right edge is guided by the right guiding board 5R.
When the width of the banknote 9 adapts to the guiding rib 18, the right edge is guided by the guiding rib 18.

The end of the banknote 9 is guided by a downward projection 13 and an upward projection 17, and moves in zigzags, and comes to the starting sensor 19.
The beam of the starting emitting/receiving element 22 is cut off by the banknote 9.
Accordingly, the microprocessor 74 drives the motor (not shown), and the banknote transporting unit 25 starts.

The banknote 9 is moved more, and goes into the path between the pulley 32 and the belt 37.

Afterwards the banknote 9 is transported by the pulley 31 and the belt 37 (in the right direction in figure 2).
In this process, the banknote 9 is guided into the narrow path between the end of an upper banknote stabilizer 38 and the end of a lower banknote stabilizer 39.
If the banknote 9 has a crease, the banknote 9 is stretched flat.
Accordingly, the distances between the banknote 9 and the first transmission sensor 68, the first reflection sensor 69, the second transmission sensor 71, the second reflection sensor 72 become approximately constant.
Afterwards, the banknote 9 is transported by the pulley 32 and the belt 37.

The first switching circuit 75 and the second switching circuit 78 are alternated "on" and "off" by the microprocessor 74 until the banknote 9 passed through from the starting sensor 19 to the banknote detecting unit 41.
In other words, the first light emitting element 47 is turned on by electricity, and emits light at a predetermined time, afterwards, the second light emitting element 58 is turned on by electricity, and emits light at a predetermined time.
The processing is alternated to all length of the banknote 9 at a short time.

In other words, the beam is emitted from the first light emitting element 47, and passes through the first emitting section 49, afterwards crosses the banknote passageway 7, then goes into the first light receiving section 64.
Afterwards, the beam is received into the first light receiving element 62 and is converted to an electrical signal P1 corresponding to the received light amount.
The receiving light amount is low, because the beam passes through the banknote 9.
At the same time, the emitted beam from the first light emitting element 47 is reflected by the surface of the banknote 9, afterwards it is received by the second receiving section 53, then is converted to an electrical signal R1 corresponding to the receiving light amount by the second receiving element 51.
The received light amount of the second receiving section 53 is higher than the amount of the first receiving section 64, because it is based on the reflecting light.

When the second light emitting element 58 is turned on by electricity, it emits light.
The beam is emitted from the second light emitting element 58, and passes through the second emitting section 61, afterwards crosses the banknote passageway 7, then goes into the second light receiving section 53.
Afterwards, the beam is received into the second light receiving element 61 and is converted to an electrical signal P2 corresponding to the received light amount.
At the same time, the emitted beam from the second light emitting element 58 is reflected by the reverse of the banknote 9, afterwards is received in the first receiving section 64, then is converted to an electrical signal R2 corresponding to the receiving light amount by the first receiving element 62.

Analog outputs P1 and R2 of the first light receiving element 62 are converted to digital signals by the first A/D converting circuit 77, and are output to the microprocessor 74.
Also, analog outputs R1 and P2 of the second light receiving element 51 are converted to digital signals by the second A/D converting circuit 76, and are output to the microprocessor 74.

Digital data which are based on the output of the first light receiving element 62 output to the microprocessor 74 at the timing signal T1 which is output by the reading controlling circuit 79 based on the signal of the microprocessor 74, afterwards it is sampled.
Next, at the timing signal T2, the signal corresponding to signal R1 of the first reflection sensor 69 is sampled as the same.

Also, at a timing signal T3, the signal corresponding to the signal P2 of the second transmission sensor 71 is sampled as the same.
Next, at a timing signal T4, the signal corresponding to the signal R2 of the second reflecting sensor 72 is sampled as the same.
Above-mentioned sampling are executed at predetermined times to all lengths of the banknote 9.
Afterwards, authenticity of the banknote 9 is distinguished based on the sampling data in the microprocessor 74, and an authenticity signal 80 is output.

As is clear from this embodiment, the first emitting section 49 both of the first transmission sensor 68 and the first reflection sensor 49 and the second emitting section 61 both of the second transmission sensor 71 and the second reflection sensor 72 have a commonality.
When a pair of the transmission sensors and reflection sensors are located, the emitting section and the receiving section are reduced by two.
Therefore, the installation area is reduced and the price is reduced.
Also, when firstly the data either of the first transmission sensor 68 or the second transmission sensor 71 are sampled, secondly the data either of the first reflection sensor 68 or the second reflection sensor 72, the lacework can be detected based on the data either of the first transmission sensor 68 or the second transmission sensor 71, afterwards the data either of the first reflection sensor 69 or the second reflection sensor 72 can be used for distinguishing.
Therefore, the distinguishing accuracy increases.

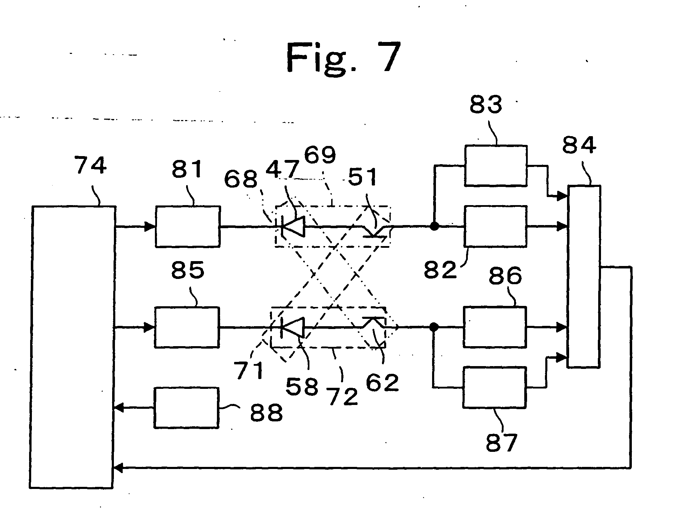

Next, the initial adjustment of the banknote detecting unit 41 is explained referring to figure 7.
The emitting amount of the first light emitting element 47 is adjusted by a first light emitting adjusting circuit 81 which is an emitting adjusting unit.
The output of the first light emitting adjusting unit 81 is controlled by the microprocessor 74.
The output of the second light receiving element 51 is adjusted by both an amplifier 82 for the second transmission sensor 71 and an amplifier 83 for the first reflection sensor 69.
The output of both the amplifier 82 for the second transmission sensor 71 and the amplifier 83 for the first reflection sensor 69 are converted from the analog signal to the digital signal by a third A/D converting circuit 84, afterwards it is output to the microprocessor 74. The amplifier 83 for the first reflection sensor 69 is a receiving outputting adjusting unit.

The emitting amount of the second light emitting element 58 is adjusted by a second light emitting adjusting circuit 85 which is an emitting adjusting unit.
The output of the second emitting adjusting circuit 85 is controlled by the microprocessor 74.
The output of the first light receiving element 62 is adjusted by both the amplifier 86 for the first transmission sensor and the amplifier 87 for the second reflection sensor.
The output of both amplifier 86 and 87 are converted from the analog signal to the digital signal by the third A/D converting circuit 84, afterwards it is output to the microprocessor 74.
The amplifier 87 for the second reflection sensor is a receiving outputting adjusting unit.

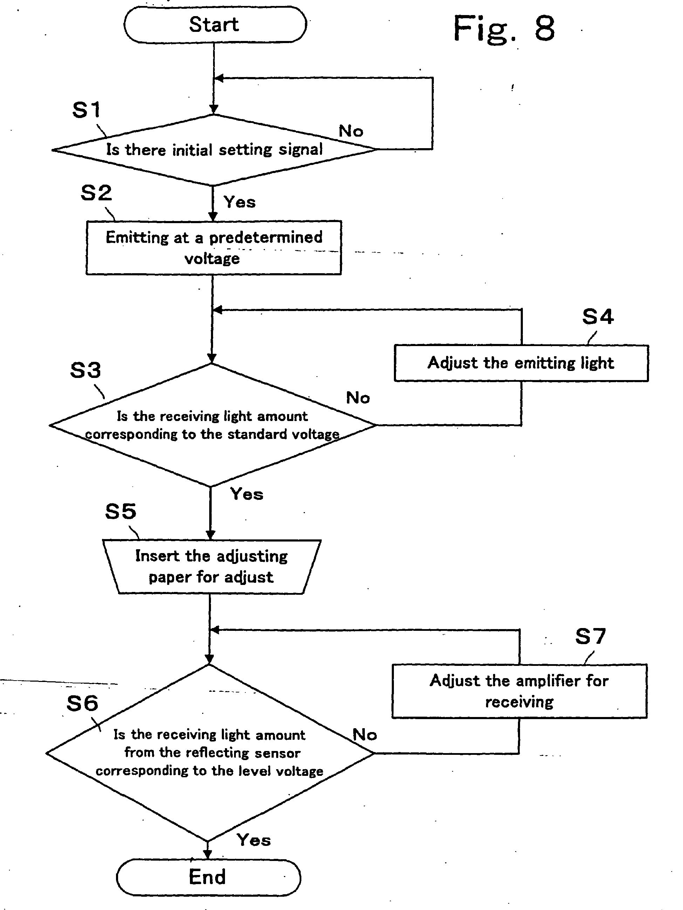

The initial setting is started by pushing the initial setting button 88.
Next, the initial setting of the banknote detecting unit 41 is explained referring to figure 8.
The initial setting of all the first transmission sensor 68, the first reflection sensor 69, the second transmission sensor 71 and the second reflection sensor 72 are the same.

Therefore, the initial setting of both the first transmission sensor 68 and the first reflection sensor 69 are explained.
Firstly, the initial setting button 88 is pushed, and an initial setting signal IN is sent to the microprocessor 74.

At step S1, when the initial setting signal "IN" is distinguished, the program goes to step S2.
At step S2, the first light emitting element 47 emits at a predetermined voltage.
The output of the first light receiving element 62 is amplified at a predetermined gain by the amplifier 86 for the first emitting sensor.
The amplified signal is converted to the digital signal by the third A/D converting circuit 84, afterwards it is output to the microprocessor 74.
At step S3, the output of the amplifier 86 for the first transmission sensor is compared to a standard voltage.
When the output does not correspond to the standard voltage, the program goes to step S4.
At step S4, when the output is larger than the standard voltage, the current is adjusted to reduce the light amount by the first light amount adjusting circuit 81.
When the output is smaller than the standard voltage, the current is adjusted to increase the light amount by the first light amount adjusting circuit 81.
By this adjustment, when the received light of the first light receiving element 62 reaches a predetermined light amount, the program goes to step S5.
In other words, when the voltage of the amplifier 86 reaches a predetermined voltage, the program goes to step S5.

At step S5, a standard paper for adjusting is inserted into the banknote passageway from the banknote entry 8.
Also, the standard paper is transported by the banknote transporting unit 25 as the same as the banknote 9.
Afterwards, the standard paper is returned to the banknote entry as the same as a fake banknote.
In this process, the output of the second light receiving element 51 is amplified by the amplifier 83 for the first reflection sensor, and is converted to a digital signal by the third A/D converting circuit 84, afterwards it is output to the microprocessor 74.

At step S6, the digital signal is compared to the standard voltage.
When the digital signal does not correspond to the standard voltage, the program goes to step S7.
When the digital signal exceeds the standard voltage, the gain of the amplifier 83 for the first reflection sensor is reduced to correspond to the standard voltage.
By this, the initial setting finishes.
Also, the standard voltage can be set at a predetermined range.

The present invention can use a beam which is a first wave at the first emitting section and another beam which is a second wave at the second emitting section.
In this case, transmission data, reflection data which are based on the first wave and other transmission data, other reflection data which are based on the second wave can be got.
In other words, one can get four different data in different situations.
Therefore, the authenticity accuracy of the banknotes increases. The number of the banknote detecting unit can be increased at width and length of the banknote.
As a result, the authenticity accuracy of the banknotes increases.

Also, the first emitting section can emit light which is an infrared ray, and the second emitting section can emit light which is a non-infrared ray.
The costs of the infrared and the non-infrared light emitting element, for example a red light emitting diode, are inexpensive.
Therefore, the costs of the device are cheaper.
Also, only the first transmission sensor and the first reflection sensor can be used in the banknote detecting unit.
In this case, only one of the light emitting elements is reduced.

## Claims (Claims for the following Contracting State(s): DE, ES, GB, IT)

1. A banknote detecting unit for a banknote distinguishing device comprising:
a first transmission sensor (68) which includes a first light emitting section (49) and a first light receiving section (64), wherein the first light receiving section (64) is located on a first light axis (66) of the first light emitting section (49) and is located on the opposing side of a banknote passageway (7), which opposing side is opposite to the first light emitting section (49), wherein the first light axis (66) slants to the banknote passageway (7),
a first reflection sensor (69) which includes the first light emitting section (49) and a second light receiving section (53), wherein the second light receiving section (53) is located on the same side of the banknote passageway (7) as the first light emitting section (49),
a second light emitting section (61) which is located on the opposing side of the banknote passageway (7), which opposing side is opposite to the first light emitting section (49), wherein the second light emitting section (61) is located such that light emitted from the second light emitting section (61) passes the banknote passageway (7) and is received in the second light receiving section (53), wherein the second light emitting section (61) and the second light receiving section (53) form a second transmission sensor (71), and wherein the second light emitting section (61) and the first light receiving section (64) form a second reflection sensor (72),
wherein
a light having a first wavelength is projected from the first light emitting section (49), and a light having a second wavelength which is different from the first wavelength is projected from the second light emitting section (61); and
a microprocessor (74) is provided for controlling the switching of the first light emitting section (49) and the second light emitting section (61) such that the first light emitting section (49) emits light having the first wavelength, when the second light emitting section (61) does not emit and that the second light emitting section (61) emits light having the second wavelength, when the first light emitting section (49) does not emit; wherein the banknote detecting unit further comprises:
a first emitting amount adjusting unit (81) which adjusts the emitting amount of the first light emitting section (49) such that it reaches a predetermined amount, wherein for performing the adjustment, light emitted from the first light emitting section (49) is detected by the first light receiving section (64),
a second emitting amount adjusting unit (85) which adjusts the emitting amount of the second light emitting section (61) such that it reaches a predetermined amount, wherein for performing the adjustment, light emitted from the second light emitting section (61) is detected by the second light receiving section (53),
an amplifier (82) for the second transmission sensor (71) which amplifier (82) is adapted to amplify the output of the second light receiving section (53) at a predetermined gain, an amplifier (83) for the first reflection sensor (69), an amplifier (86) for the first transmission sensor (68) which amplifier (86) is adapted to amplify the output of the first light receiving section (64) at a predetermined gain, and an amplifier (87) for the second reflection sensor (72); wherein
the amplifier (83) for the first reflection sensor (69) adjusts, in an arrangement in which a standard paper for adjusting is inserted into the banknote passageway (7) and in which light is emitted from the first light emitting section (49), the gain of the output of the second light receiving section (53) such that it reaches a predetermined amount defined for the second light receiving section (53); and wherein
the amplifier (87) for the second reflection sensor (72) adjusts, in an arrangement in which a standard paper for adjusting is inserted into the banknote passageway (7) and in which light is emitted from the second light emitting section (61), the gain of the output of the first light receiving section (64) such that it reaches a predetermined amount defined for the first light receiving section (64).

2. The banknote detecting unit for the banknote distinguishing device claimed in claim 1, wherein the section of the first light axis (66) between the first light emitting section (49) and the banknote passageway (7) and the section of the banknote passageway (7) located upstream of the first light axis (66), with regard to a banknote transporting direction, form an obtuse angle.

3. The banknote detecting unit for the banknote distinguishing device claimed in claim 1 or 2, wherein the first light emitting section (49) emits infrared rays, and the second light emitting section (61) emits non-infrared rays.

4. The banknote detecting unit for the banknote distinguishing device claimed in any of claims 1 to 3, wherein it further includes a reading controlling unit (79), which controls the reading such that, when the first light emitting section (49) emits the rays, the receiving output of the first light receiving section (64) is read and then, the receiving output of the second light receiving section (53) is read, afterwards, the emitting of the first light emitting section (49) stops and the second light emitting section (61) emits the rays, and the receiving output of the second light receiving section (53) is read and then, the receiving output of the first light receiving section (64) is read.

## Claims (Claims for the following Contracting State(s): NL)

1. A banknote detecting unit for a banknote distinguishing device comprising:
a first transmission sensor (68) which includes a first light emitting section (49) and a first light receiving section (64), wherein the first light receiving section (64) is located on a first light axis (66) of the first light emitting section (49) and is located on the opposing side of a banknote passageway (7), which opposing side is opposite to the first light emitting section (49), wherein the first light axis (66) slants to the banknote passageway (7),
a first reflection sensor (69) which includes the first light emitting section (49) and a second light receiving section (53), wherein the second light receiving section (53) is located on the same side of the banknote passageway (7) as the first light emitting section (49),
a second light emitting section (61) which is located on the opposing side of the banknote passageway (7), which opposing side is opposite to the first light emitting section (49), wherein the second light emitting section (61) is located such that light emitted from the second light emitting section (61) passes the banknote passageway (7) and is received in the second light receiving section (53), wherein the second light emitting section (61) and the second light receiving section (53) form a second transmission sensor (71), and wherein the second light emitting section (61) and the first light receiving section (64) form a second reflection sensor (72),
wherein
a light having a first wavelength is projected from the first light emitting section (49), and a light having a second wavelength which is different from the first wavelength is projected from the second light emitting section (61); and
a microprocessor (74) is provided for controlling the switching of the first light emitting section (49) and the second light emitting section (61) such that the first light emitting section (49) emits light having the first wavelength, when the second light emitting section (61) does not emit and that the second light emitting section (61) emits light having the second wavelength, when the first light emitting section (49) does not emit.

2. The banknote detecting unit for the banknote distinguishing device claimed in claim 1, wherein the section of the first light axis (66) between the first light emitting section (49) and the banknote passageway (7) and the section of the banknote passageway (7) located upstream of the first light axis (66), with regard to a banknote transporting direction, form an obtuse angle.

3. The banknote detecting unit for the banknote distinguishing device claimed in claim 1 or 2, wherein the first light emitting section (49) emits infrared rays, and the second light emitting section (61) emits non-infrared rays.

4. The banknote detecting unit for the banknote distinguishing device claimed in any of claims 1 to 3, wherein it further includes a reading controlling unit (79), which controls the reading such that, when the first light emitting section (49) emits the rays, the receiving output of the first light receiving section (64) is read and then, the receiving output of the second light receiving section (53) is read, afterwards, the emitting of the first light emitting section (49) stops and the second light emitting section (61) emits the rays, and the receiving output of the second light receiving section (53) is read and then, the receiving output of the first light receiving section (64) is read.

5. The banknote detecting unit for the banknote distinguishing device as claimed in any of claims 1 to 4,
wherein
an emitting amount adjusting unit (81) which adjusts the emitting amount of the first light emitting section (49) such that it reaches a predetermined amount, wherein for performing the adjustment, light emitted from the first light emitting section (49) is detected by the first light receiving section (64), and
a receiving outputting adjusting unit (83) which adjusts, in an arrangement in which a standard paper for adjusting is inserted into the banknote passageway (7) and in which light is emitted from the first light emitting section (49), the gain of the output of the second light receiving section (53) such that it reaches a predetermined amount defined for the second light receiving section (53).

## Patentansprüche (Patentansprüche für folgende(n) Vertragsstaat(en): NL)

1. Geldschein-Erfassungseinheit für eine Geldschein-Erkennungsvorrichtung, welche aufweist:
einen ersten Transmissionssensor (68), der einen ersten Licht-Emissionsabschnitt (49) und einen ersten Licht-Empfangsabschnitt (64) aufweist, wobei der erste Licht-Empfangsabschnitt (64) auf einer ersten Lichtachse (66) des ersten Licht-Emissionsabschnittes (49) angeordnet ist und auf der gegenüberliegenden Seite eines Geldschein-Durchganges (7) angeordnet ist, welche gegenüberliegende Seite gegenüberliegend von dem ersten Licht-Emissionsabschnitt (49) ist, wobei die erste Lichtachse (66) schräg zu dem Geldschein-Durchgang (7) verläuft, einen ersten Reflektionssensor (69), der den ersten Licht-Emissionsabschnitt (49) und einen zweiten Licht-Empfangsabschnitt (53) aufweist, wobei der zweite Licht-Empfangsabschnitt (53) auf der gleichen Seite des Geldschein-Durchganges (7) wie der erste Licht-Emissionsabschnitt (49) angeordnet ist,
einen zweiten Licht-Emissionsabschnitt (61), der auf der gegenüberliegenden Seite des Geldschein-Durchganges (7) angeordnet ist, welche gegenüberliegende Seite gegenüberliegend von dem ersten Licht-Emissionsabschnitt (49) ist, wobei der zweite Licht-Emissionsabschnitt (61) derart angeordnet ist, dass Licht, das von dem zweiten Licht-Emissionsabschnitt (61) ausgestrahlt wird, durch den Geldschein-Durchgang (7) hindurchtritt und in dem zweiten Licht-Empfangsabschnitt (53) empfangen wird, wobei der zweite Licht-Emissionsabschnitt (61) und der zweite Licht-Empfangsabschnitt (53) einen zweiten Transmissionssensor (71) bilden, und wobei der zweite Licht-Emissionsabschnitt (61) und der erste Licht-Empfangsabschnitt (64) einen zweiten Reflektionssensor (72) bilden,
wobei ein Licht, das eine erste Wellenlänge hat, von dem ersten Licht-Emissionsabschnitt (49) abgestrahlt wird, und ein Licht, das eine zweite Wellenlänge hat, die unterschiedlich von der ersten Wellenlänge ist, von dem zweiten Licht-Emissionsabschnitt (61) abgestrahlt wird; und
ein Mikroprozessor (74) vorgesehen ist zum Steuern des Schaltens des ersten Licht-Emissionsabschnittes (49) und des zweiten Licht-Emissionsabschnittes (61) derart, dass der erste Licht-Emissionsabschnitt (49) Licht, das die erste Wellenlänge hat, ausstrahlt, wenn der zweite Licht-Emissionsabschnitt (61) nicht ausstrahlt, und dass der zweite Licht-Emissionsabschnitt (61) Licht, das die zweite Wellenlänge hat, ausstrahlt, wenn der erste Licht-Emissionsabschnitt (49) nicht ausstrahlt.

2. Geldschein-Erfassungseinheit für die Geldschein-Erkennungsvorrichtung, die in Anspruch 1 beansprucht wird, wobei der Abschnitt der ersten Lichtachse (66) zwischen dem ersten Licht-Emissionsabschnitt (49) und dem Geldschein-Durchgang (7) und der Abschnitt des Geldschein-Durchganges (7), der in Bezug auf eine Geldschein-Transportrichtung stromaufwärts von der ersten Lichtachse (66) angeordnet ist, einen stumpfen Winkel bilden.

3. Geldschein-Erfassungseinheit für die Geldschein-Erkennungsvorrichtung, die in Anspruch 1 oder 2 beansprucht wird, wobei der erste Licht-Emissionsabschnitt (49) Infrarotstrahlen ausstrahlt und der zweite Licht-Emissionsabschnitt (61) Strahlen außerhalb des Infrarotbereiches ausstrahlt.

4. Geldschein-Erfassungseinheit für die Geldschein-Erkennungsvorrichtung, die in einem der Ansprüche 1 bis 3 beansprucht wird, wobei sie ferner eine Lese-Steuerungseinheit (79) aufweist, welche das Auslesen derart steuert, dass, wenn der erste Licht-Emissionsabschnitt (49) Strahlen ausstrahlt, der Empfangsausgang des ersten Licht-Empfangsabschnittes (64) ausgelesen wird und dann der Empfangsausgang des zweiten Licht-Empfangsabschnittes (53) ausgelesen wird, danach das Ausstrahlen des ersten Licht-Emissionsabschnittes (49) stoppt und der zweite Licht-Emissionsabschnitt (61) Strahlen ausstrahlt, und der Empfangsausgang des zweiten Licht-Empfangsabschnittes (53) ausgelesen wird und dann der Empfangsausgang des ersten Licht-Empfangsabschnittes (64) ausgelesen wird.

5. Geldschein-Erfassungseinheit für die Geldschein-Erkennungsvorrichtung, wie sie in einem der Ansprüche 1 bis 4 beansprucht wird, wobei:
eine Emissionsmenge-Einstelleinheit (81), welche die Emissionsmenge des ersten Licht-Emissionsabschnittes (49) derart einstellt, dass sie eine vorbestimmte Menge erreicht, wobei zum Durchführen der Einstellung Licht, das von dem ersten Licht-Emissionsabschnitt (49) ausgestrahlt wird, von dem ersten Licht-Empfangsabschnitt (64) erfasst wird, und
eine Empfangs-Ausgang-Einstelleinheit (83), die in einer Anordnung, in der ein Standardpapier zum Einstellen in den Geldschein-Durchgang (7) eingeführt ist und in der Licht von dem ersten Licht-Emissionsabschnitt (49) ausgestrahlt wird, die Verstärkung des Ausganges des zweiten Licht-Empfangsabschnittes (53) derart einstellt, dass er eine vorbestimmte Menge, die für den zweiten Licht-Empfangsabschnitt (53) definiert ist, erreicht.

## Patentansprüche (Patentansprüche für folgende(n) Vertragsstaat(en): DE, ES, GB, IT)

1. Geldschein-Erfassungseinheit für eine Geldschein-Erkennungsvorrichtung, welche aufweist:
einen ersten Transmissionssensor (68), der einen ersten Licht-Emissionsabschnitt (49) und einen ersten Licht-Empfangsabschnitt (64) aufweist, wobei der erste Licht-Empfangsabschnitt (64) auf einer ersten Lichtachse (66) des ersten Licht-Emissionsabschnittes (49) angeordnet ist und auf der gegenüberliegenden Seite eines Geldschein-Durchganges (7) angeordnet ist, welche gegenüberliegende Seite gegenüberliegend von dem ersten Licht-Emissionsabschnitt (49) ist, wobei die erste Lichtachse (66) schräg zu dem Geldschein-Durchgang (7) verläuft, einen ersten Reflektionssensor (69), der den ersten Licht-Emissionsabschnitt (49) und einen zweiten Licht-Empfangsabschnitt (53) aufweist, wobei der zweite Licht-Empfangsabschnitt (53) auf der gleichen Seite des Geldschein-Durchganges (7) wie der erste Licht-Emissionsabschnitt (49) angeordnet ist,
einen zweiten Licht-Emissionsabschnitt (61), der auf der gegenüberliegenden Seite des Geldschein-Durchganges (7) angeordnet ist, welche gegenüberliegende Seite gegenüberliegend von dem ersten Licht-Emissionsabschnitt (49) ist, wobei der zweite Licht-Emissionsabschnitt (61) derart angeordnet ist, dass Licht, das von dem zweiten Licht-Emissionsabschnitt (61) ausgestrahlt wird, durch den Geldschein-Durchgang (7) hindurchtritt und in dem zweiten Licht-Empfangsabschnitt (53) empfangen wird, wobei der zweite Licht-Emissionsabschnitt (61) und der zweite Licht-Empfangsabschnitt (53) einen zweiten Transmissionssensor (71) bilden, und wobei der zweite Licht-Emissionsabschnitt (61) und der erste Licht-Empfangsabschnitt (64) einen zweiten Reflektionssensor (72) bilden,
wobei ein Licht, das eine erste Wellenlänge hat, von dem ersten Licht-Emissionsabschnitt (49) abgestrahlt wird, und ein Licht, das eine zweite Wellenlänge hat, die unterschiedlich von der ersten Wellenlänge ist, von dem zweiten Licht-Emissionsabschnitt (61) abgestrahlt wird; und
ein Mikroprozessor (74) vorgesehen ist zum Steuern des Schaltens des ersten Licht-Emissionsabschnittes (49) und des zweiten Licht-Emissionsabschnittes (61) derart, dass der erste Licht-Emissionsabschnitt (49) Licht, das die erste Wellenlänge hat, ausstrahlt, wenn der zweite Licht-Emissionsabschnitt (61) nicht ausstrahlt, und dass der zweite Licht-Emissionsabschnitt (61) Licht, das die zweite Wellenlänge hat, ausstrahlt, wenn der erste Licht-Emissionsabschnitt (49) nicht ausstrahlt; wobei die Geldschein-Erfassungseinheit ferner aufweist:
eine erste Emissionsmenge-Einstelleinheit (81), welche die Emissionsmenge des ersten Licht-Emissionsabschnittes (49) derart einstellt, dass sie eine vorbestimmte Menge erreicht, wobei zum Durchführen der Einstellung Licht, das von dem ersten Licht-Emissionsabschnitt (49) ausgestrahlt wird, von dem ersten Licht-Empfangsabschnitt (64) erfasst wird,
eine zweite Emissionsmenge-Einstelleinheit (85) welche die Emissionsmenge des zweiten Licht-Emissionsabschnittes (61) derart einstellt, dass sie eine vorbestimmte Menge erreicht, wobei zum Durchführen der Einstellung Licht, das von dem zweiten Licht-Emissionsabschnitt (61) ausgestrahlt wird, von dem zweiten Licht-Empfangsabschnitt (53) erfasst wird,
einen Verstärker (82) für den zweiten Transmissionssensor (71), welcher Verstärker (82) derart angepasst ist, um den Ausgang des zweiten Licht-Empfangsabschnittes (53) mit einer vorbestimmten Verstärkung zu verstärken, einen Verstärker (83) für den ersten Reflektionssensor (69), einen Verstärker (86) für den ersten Transmissionssensor (68), welcher Verstärker (86) derart angepasst ist, um den Ausgang des ersten Licht-Empfangsabschnittes (64) mit einer vorbestimmten Verstärkung zu verstärken, und einen Verstärker (87) für den zweiten Reflektionssensor (72); wobei
der Verstärker (83) für den ersten Reflektionssensor (69) in einer Anordnung, in der ein Standardpapier zum Einstellen in den Geldschein-Durchgang (7) eingeführt ist und in welcher Licht von dem ersten Licht-Emissionsabschnitt (49) ausgestrahlt wird, die Verstärkung des Ausganges des zweiten Licht-Empfangsabschnittes (53) derart einstellt, dass sie eine vorbestimmte Menge, die für den zweiten Licht-Empfangsabschnitt (53) definiert ist, erreicht; und wobei
der Verstärker (87) für den zweiten Reflektionssensor (72) in einer Anordnung, in der ein Standardpapier zum Einstellen in den Geldschein-Durchgang (7) eingeführt ist und in der Licht von dem zweiten Licht-Emissionsabschnitt (61) ausgestrahlt wird, die Verstärkung des Ausganges des ersten Licht-Empfangsabschnittes (64) derart einstellt, dass sie eine vorbestimmte Menge, die für den ersten Licht-Empfangsabschnitt (64) definiert ist, erreicht.

2. Geldschein-Erfassungseinheit für die Geldschein-Erkennungsvorrichtung, die in Anspruch 1 beansprucht wird, wobei der Abschnitt der ersten Lichtachse (66) zwischen dem ersten Licht-Emissionsabschnitt (49) und dem Geldschein-Durchgang (7) und der Abschnitt des Geldschein-Durchganges (7), der in Bezug auf eine Geldschein-Transportrichtung stromaufwärts von der ersten Lichtachse (66) angeordnet ist, einen stumpfen Winkel bilden.

3. Geldscheih-Erfassungseinheit für die Geldschein-Erkennungsvorrichtung, die in Anspruch 1 oder 2 beansprucht wird, wobei der erste Licht-Emissionsabschnitt (49) Infrarotstrahlen ausstrahlt und der zweite Licht-Emissionsabschnitt (61) Strahlen außerhalb des Infrarotbereiches ausstrahlt.

4. Geldschein-Erfassungseinheit für die Geldschein-Erkennungsvorrichtung, die in einem der Ansprüche 1 bis 3 beansprucht wird, wobei sie ferner eine Lese-Steuerungseinheit (79) aufweist, welche das Auslesen derart steuert, dass, wenn der erste Licht-Emissionsabschnitt (49) Strahlen ausstrahlt, der Empfangsausgang des ersten Licht-Empfangsabschnittes (64) ausgelesen wird und dann der Empfangsausgang des zweiten Licht-Empfangsabschnittes (53) ausgelesen wird, danach das Ausstrahlen des ersten Licht-Emissionsabschnittes (49) stoppt und der zweite Licht-Emissionsabschnitt (61) Strahlen ausstrahlt, und der Empfangsausgang des zweiten Licht-Empfangsabschnittes (53) ausgelesen wird und dann der Empfangsausgang des ersten Licht-Empfangsabschnittes (64) ausgelesen wird.

## Revendications (Revendications pour l'(les) Etat(s) contractant(s) suivant(s): DE, ES, GB, IT)

1. Unité de détection de billets de banque pour un dispositif de distinction de billets de banque comprenant :
un premier capteur de transmission (68) qui inclut une première section d'émission de lumière (49) et une première section de réception de lumière (64), dans lequel la première section de réception de lumière (64) est située sur un premier axe de lumière (66) de la première section d'émission de lumière (49) et est située sur le côté opposé d'un passage de billets de banque (7), ce côté opposé fait face à la première section d'émission de lumière (49), dans laquelle le premier axe de lumière (66) est incliné vers le passage de billets de banque (7),
un premier capteur de réflexion (69) qui inclut la première section d'émission de lumière (49) et une deuxième section de réception de lumière (53), dans laquelle la deuxième section de réception de lumière (53) est située sur le même côté du passage de billets de banque (7) que la première section d'émission de lumière (49),
une deuxième section d'émission de lumière (61) qui est située sur le côté opposé du passage de billets de banque (7), ce côté opposé fait face à la première section d'émission de lumière (49), dans laquelle la deuxième section d'émission de lumière (61) est située de telle sorte que la lumière émise par la deuxième section d'émission de lumière (61) passe par le passage de billets de banque (7) et est reçue dans la deuxième section de réception de lumière (53), dans laquelle la deuxième section d'émission de lumière (61) et la deuxième section de réception de lumière (53) forment un deuxième capteur de transmission (71), et dans laquelle la deuxième section d'émission de lumière (61) et la première section de réception de lumière (64) forment un deuxième capteur de réflexion (72),
dans laquelle
une lumière ayant une première longueur d'onde est projetée par la première section d'émission de lumière (49), et une lumière ayant une deuxième longueur d'onde qui est différente de la première longueur d'onde est projetée par la deuxième section d'émission de lumière (61) ; et
un microprocesseur (74) est prévu pour commander la commutation de la première section d'émission de lumière (49) et de la deuxième section d'émission de lumière (61) de telle sorte que la première section d'émission de lumière (49) émette une lumière ayant la première longueur d'onde, lorsque la deuxième section d'émission de lumière (61) n'émet pas, et de telle sorte que la deuxième section d'émission de lumière (61) émette une lumière ayant la deuxième longueur d'onde, lorsque la première section d'émission de lumière (49) n'émet pas ; dans laquelle l'unité de détection de billets de banque comprend en outre :
une première unité de réglage de quantité d'émission (81) qui règle la quantité d'émission de la première section d'émission de lumière (49) de telle sorte qu'elle atteigne une quantité prédéterminée, dans laquelle pour effectuer le réglage, la lumière émise par la première section d'émission de lumière (49) est détectée par la première section de réception de lumière (64),
une deuxième unité de réglage de quantité d'émission (85) qui règle la quantité d'émission de la deuxième section d'émission de lumière (61) de telle sorte qu'elle atteigne une quantité prédéterminée, dans laquelle pour effectuer le réglage, la lumière émise par la deuxième section d'émission de lumière (61) est détectée par la deuxième section de réception de lumière (53),
un amplificateur (82) pour le deuxième capteur de transmission (71), cet amplificateur (82) est adapté pour amplifier la sortie de la deuxième section de réception de lumière (53) à un gain prédéterminé, un amplificateur (83) pour le premier capteur de réflexion (69), un amplificateur (86) pour le premier capteur de transmission (68), cet amplificateur (86) est adapté pour amplifier la sortie de la première section de réception de lumière (64) à un gain prédéterminé, et un amplificateur (87) pour le deuxième capteur de réflexion (72) ; dans laquelle
l'amplificateur (83) pour le premier capteur de réflexion (69) règle, dans une disposition dans laquelle un papier standard pour effectuer le réglage est inséré dans le passage de billets de banque (7) et dans laquelle la lumière est émise par la première section d'émission de lumière (49), le gain de la sortie de la deuxième section de réception de lumière (53), de telle sorte qu'il atteigne une quantité prédéterminée définie pour la deuxième section de réception de lumière (53) ; et dans laquelle
l'amplificateur (87) pour le deuxième capteur de réflexion (72) règle, dans une disposition dans laquelle un papier standard pour effectuer le réglage est inséré dans le passage de billets de banque (7) et dans laquelle la lumière est émise par la deuxième section d'émission de lumière (61), le gain de la sortie de la première section de réception de lumière (64), de telle sorte qu'il atteigne une quantité prédéterminée définie pour la première section de réception de lumière (64).

2. Unité de détection de billets de banque pour le dispositif de distinction de billets de banque selon la revendication 1, dans laquelle la section du premier axe de lumière (66) entre la première section d'émission de lumière (49) et le passage de billets de banque (7) et la section du passage de billets de banque (7) située en amont du premier axe de lumière (66), par rapport à une direction de transport de billets de banque, forment un angle obtus.

3. Unité de détection de billets de banque pour le dispositif de distinction de billets de banque selon la revendication 1 ou 2, dans laquelle la première section d'émission de lumière (49) émet des rayons infrarouges, et la deuxième section d'émission de lumière (61) émet des rayons non-infrarouges.

4. Unité de détection de billets de banque pour le dispositif de distinction de billets de banque selon l'une quelconque des revendications 1 à 3, dans laquelle elle inclut en outre une unité de commande de lecture (79), qui commande la lecture de telle sorte que, lorsque la première section d'émission de lumière (49) émet les rayons, la sortie de réception de la première section de réception de lumière (64) est lue, puis, la sortie de réception de la deuxième section de réception de lumière (53) est lue, après quoi, l'émission de la première section d'émission de lumière (49) s'arrête et la deuxième section d'émission de lumière (61) émet les rayons, et la sortie de réception de la deuxième section de réception de lumière (53), la sortie de réception de la première section de réception de lumière (64) est lue.

## Revendications (Revendications pour l'(les) Etat(s) contractant(s) suivant(s): NL)

1. Unité de détection de billets de banque pour un dispositif de distinction de billets de banque comprenant :
un premier capteur de transmission (68) qui inclut une première section d'émission de lumière (49) et une première section de réception de lumière (64), dans lequel la première section de réception de lumière (64) est située sur un premier axe de lumière (66) de la première section d'émission de lumière (49) et est située sur le côté opposé d'un passage de billets de banque (7), ce côté opposé fait face à la première section d'émission de lumière (49), dans laquelle le premier axe de lumière (66) est incliné vers le passage de billets de banque (7),
un premier capteur de réflexion (69) qui inclut la première section d'émission de lumière (49) et une deuxième section de réception de lumière (53), dans laquelle la deuxième section de réception de lumière (53) est située sur le même côté du passage de billets de banque (7) que la première section d'émission de lumière (49),
une deuxième section d'émission de lumière (61) qui est située sur le côté opposé du passage de billets de banque (7), ce côté opposé fait face à la première section d'émission de lumière (49), dans laquelle la deuxième section d'émission de lumière (61) est située de telle sorte que la lumière émise par la deuxième section d'émission de lumière (61) passe par le passage de billets de banque (7) et est reçue dans la deuxième section de réception de lumière (53), dans laquelle la deuxième section d'émission de lumière (61) et la deuxième section de réception de lumière (53) forment un deuxième capteur de transmission (71), et dans laquelle la deuxième section d'émission de lumière (61) et la première section de réception de lumière (64) forment un deuxième capteur de réflexion (72),
dans laquelle
une lumière ayant une première longueur d'onde est projetée par la première section d'émission de lumière (49), et une lumière ayant une deuxième longueur d'onde qui est différente de la première longueur d'onde est projetée par la deuxième section d'émission de lumière (61) ; et
un microprocesseur (74) est prévu pour commander la commutation de la première section d'émission de lumière (49) et de la deuxième section d'émission de lumière (61) de telle sorte que la première section d'émission de lumière (49) émette une lumière ayant la première longueur d'onde, lorsque la deuxième section d'émission de lumière (61) n'émet pas, et de telle sorte que la deuxième section d'émission de lumière (61) émette une lumière ayant la deuxième longueur d'onde, lorsque la première section d'émission de lumière (49) n'émet pas.

2. Unité de détection de billets de banque pour le dispositif de distinction de billets de banque selon la revendication 1, dans laquelle la section du premier axe de lumière (66) entre la première section d'émission de lumière (49) et le passage de billets de banque (7) et la section du passage de billets de banque (7) située en amont du premier axe de lumière (66), par rapport à une direction de transport de billets de banque, forment un angle obtus.

3. Unité de détection de billets de banque pour le dispositif de distinction de billets de banque selon la revendication 1 ou 2, dans laquelle la première section d'émission de lumière (49) émet des rayons infrarouges, et la deuxième section d'émission de lumière (61) émet des rayons non-infrarouges,

4. Unité de détection de billets de banque pour le dispositif de distinction de billets de banque selon l'une quelconque des revendications 1 à 3, dans laquelle elle inclut en outre une unité de commande de lecture (79), qui commande la lecture de telle sorte que, lorsque la première section d'émission de lumière (49) émet les rayons, la sortie de réception de la première section de réception de lumière (64) est lue, puis, la sortie de réception de la deuxième section de réception de lumière (53) est lue, après quoi, l'émission de la première section d'émission de lumière (49) s'arrête et la deuxième section d'émission de lumière (61) émet les rayons, et la sortie de réception de la deuxième section de réception de lumière (53), la sortie de réception de la première section de réception de lumière (64) est lue.

5. Unité de détection de billets de banque pour le dispositif de distinction de billets de banque selon l'une quelconque des revendications 1 à 4,
dans laquelle
une unité de réglage de quantité d'émission (81) qui règle la quantité d'émission de la première section d'émission de lumière (49) de telle sorte qu'elle atteigne une quantité prédéterminée, dans laquelle pour effectuer le réglage, la lumière émise par la première section d'émission de lumière (49) est détectée par la première section de réception de lumière (64), et
une unité de réglage de sortie de réception (83) qui règle, dans une disposition dans laquelle un papier standard pour effectuer le réglage est inséré dans le passage de billets de banque (7) et dans laquelle la lumière est émise par la première section d'émission de lumière (49), le gain de la sortie de la deuxième section de réception de lumière (53), de telle sorte qu'il atteigne une quantité prédéterminée définie pour la deuxième section de réception de lumière (53).
